(19) Europäisches Patentamt / European Patent Office / Office européen des brevets

(11) **EP 3 480 171 A1**

(12) **EUROPEAN PATENT APPLICATION**

(43) Date of publication:
**08.05.2019 Bulletin 2019/19**

(51) Int Cl.:
**C02F 9/00** (2006.01)  *C02F 103/32* (2006.01)
*C02F 3/02* (2006.01)  *C02F 3/28* (2006.01)

(21) Application number: **18160763.1**

(22) Date of filing: **08.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.11.2017 KR 20170145910**

(71) Applicant: **Korea Institute of Science and Technology**
**Seoul 02792 (KR)**

(72) Inventors:
• **Lee, Young-haeng**
  **02792 Seoul (KR)**
• **Park, Chan-hyuk**
  **02792 Seoul (KR)**
• **Song, Kyung-guen**
  **02792 Seoul (KR)**
• **Jurng, Jong-soo**
  **02792 Seoul (KR)**
• **Choi, Jae Young**
  **02792 Seoul (KR)**

(74) Representative: **ZBM Patents - Zea, Barlocci & Markvardsen**
**Plaza Catalunya, 1 2nd floor**
**08002 Barcelona (ES)**

(54) **FOOD WASTEWATER TREATMENT SYSTEM AND OPERATION METHOD OF THE SAME**

(57) The present disclosure relates to a food wastewater treatment system which generates biogas while increasing a food wastewater treatment quantity as compared with the related art using an existing sewage treatment process to improve an efficiency of new and renewable energy and an operating method thereof. A food wastewater treatment system includes: a first inlet 100 into which a sewage flows, a second inlet 200 into which a food wastewater flows; a mixture equalization tank in which a predetermined amount of sewage flowing from the first inlet 100 is mixed with the food wastewater flowing from the second inlet 200 and the food wastewater with respect to sewage is 0.5% or higher; a precipitation tank and aerobic tank located at a rear end of the first inlet 100; and an anaerobic biofilm reactor 400 and a biogas purifying unit located at a rear end of the second inlet 200, in which a biogas which generates a more amount of energy than a power required to treat the food wastewater and sewage flowing at the time of operation of the system is produced.

EP 3 480 171 A1

**Description**

**Cross-reference to related applications**

This application claims the priority of Korean Patent Application No. 10-2017-0145910 filed on November 3, 2017, in the Korean Intellectual Property Office, the disclosure of which is incorporated herein by reference.

**Background**

The present disclosure relates to a food wastewater treatment system and an operating method thereof, and more particularly, to a food wastewater treatment system which generates biogas while increasing a food wastewater treatment quantity as compared with the related art using an existing sewage treatment process to improve an efficiency of new and renewable energy and an operating method thereof.

A food wastewater is a wastewater which is eliminated and leached from wastes discharged from home or restaurants during a pre-treatment process of food wastes and has a high concentration of salinity and floating matters as compared with the existing sewage. Further, when the food wastewater is dried, since an organic material content of the food wastewater is considerably high to be 83.7 to 90.5%, biological oxygen demand (BOD) and chemical oxygen demand (COD) are 500 times higher than the sewage. Therefore, in the food wastewater treatment, a concentration of an organic material is high and a concentration of the salinity and the floating material is high as compared with a normal sewage treatment so that a separate process which is different from the sewage treatment process is necessary. However, in the related art, the food wastewater is treated as it is during a normal sewage treatment process and thus there is a limitation in treating a large amount of food wastewater due to a high level of concentrations of an organic material, a salinity, and a floating material as described above. The normal sewage treatment process of the related art is configured by an aerobic activated sludge process rather than an anaerobic activated sludge process so that a large amount of organic materials included in the food wastewater cannot be treated. Further, due to the limited treatment amount, there is a limitation in increasing an amount of produced biogas. As described above, since the food wastewater includes more organic materials than a normal sewage so that when the organic materials are hydrolyzed under anaerobic conditions, after generating volatile fatty acids such as acetic acid, propionic acid, and butyric acid, finally, a process of gasification with methane, carbon dioxide, ammonia, and hydrogen sulfide may be performed. An amount of biological sludge generated per unit organic material during this process is considerably smaller than that of aerobic digestion but methane which may be used as fuel is included in discharged digestion gas at a high proportion. The biogas which is configured with methane gas as a major component is a material which is getting the spotlight as an alternative clean energy source for fossil fuels which cause global warming and is a useful resource which is recognized as an extremely useful value. However, as described above, the sewage treatment process of the related art is mainly configured by an aerobic activated sludge process so as not to be optimized for a process of decomposing a high level of organic material to produce methane gas. Further, some of existing sewage treatment processes overcome the above-mentioned drawback to treat the sludge and the food wastewater together at the time of anaerobic digestion. However, the amount of treated food wastewater is lower than 0.01% of a sewage inflow amount so that the treatment efficiency is insufficient. As such a food wastewater treatment system, for example, a system for recycling food wastewater disclosed in Korean Registered Patent No. 10-1611436 uses a process of pre-treating the food wastewater and then centrifuging the food wastewater to use a solid as a raw material for a fertilizer, and using the pretreatment liquid as a liquid fertilizer after performing aerobic fermentation, agglutination reaction, and dehydration treatment on a pretreatment liquid or mixing the pretreatment liquid with food wastewater to reduce salinity and BOD. However, a purpose of the treated food wastewater is limited to the fertilizer so that there is a disadvantage in that it is difficult to expect an additional effect such as production of biogas for reducing greenhouse gasses which are currently attracting attention as a social issue.

[Related Art Document]

[Patent Document]

   (Patent Document 1) Korean Registered Patent No. 10-1611436
   (Patent Document 2) Korean Registered Patent No. 10-1189615
   (Patent Document 3) Korean Registered Patent No. 10-1599424
   (Patent Document 4) Korean Registered Patent No. 10-1213533

## Summary

An object to be achieved by the present disclosure is to provide a food wastewater treatment system which is capable of treating a high level of organic materials, a salinity, and floating matters to simultaneously perform a food wastewater treatment and an energizing process during an existing sewage treatment process.

Further, another object to be achieved by the present invention is to provide an efficient process which not only simultaneously treats the food wastewater and sewage but also exceeds 1% of the food wastewater treatment capacity with respect to the sewage of the related art.

Furthermore, another object to be achieved by the present disclosure is to provide an eco-friendly food wastewater treatment system which generates biogas during the process of simultaneously treating the food wastewater and sewage based on a high concentration of organic material to improve an energy efficiency.

According to an aspect of the present disclosure, there is provided a food wastewater treatment system, including: a first inlet into which a sewage flows, a second inlet into which a food wastewater flows; a mixture equalization tank in which a predetermined amount of sewage flowing from the first inlet is mixed with the food wastewater flowing from the second inlet and the food wastewater with respect to sewage is 0.5% or higher; a precipitation tank and an aerobic tank located at a rear end of the first inlet; and an anaerobic biofilm reactor and a biogas purifying unit located at a rear end of the second inlet, in which a biogas which generates a more amount of energy than a power required to treat the food wastewater and the sewage flowing at the time of operation of the system is produced.

Here, when the biogas is produced in the anaerobic biofilmreaction tank via the first mixture equalization tank, a methane gas may be 10% or lower than COD/COD, and the dissolved methane gas is a ratio (%, $COD_{dissolved\ methane}/COD_{mixture\ solution}$) obtained when methane gas dissolved in the water is converted into a COD with respect to a total organic material concentration (COD) in the mixture solution and $COD_{dissolved}$ methane is a value obtained by converting the dissolved methane gas of various products treated through the anaerobic biofilm reactor into a COD, and $COD_{mixture}$ solution is a total COD value of mixture solution in which the food wastewater and the sewage are mixed.

Further, the mixture ratio of the food wastewater with respect to the sewage and the amount of produced methane may have the relationship as represented in the following Equation 1.

$$\text{(Equation 1)}\quad Y = 0.0423\ X + 0.0168$$

In Equation 1, Y refers to an amount of produced methane (m3 methane/total volume of m3 food wastewater and sewage) and X refers to a mixture ratio of a food wastewater with respect to a sewage (% V food wastewater/V sewage).

According to another aspect of the present disclosure, there is provided an operating method of a food wastewater treatment system, including: a first step of flowing a sewage into a first inlet and flowing a food wastewater into a second inlet; a second step of mixing the sewage flowing into the first inlet and the food wastewater flowing into the second inlet in a first mixture equalization tank in which the food wastewater with respect to the sewage in a mixture volume is 0.5% or more; a third step of flowing the sewage and food wastewater mixed in the first mixture equalization tank into an anaerobic biofilm reactor to produce methane gas; and a fourth step of transferring a treatment water of the anaerobic biofilm reactor into a front end of the precipitation tank to be treated in an aerobic reaction tank and then discharged through a secondary precipitation tank and performing a dehydration process on a sludge of the anaerobic biofilm reactor and then discarding the sludge, and collecting gas after purifying the gas including methane produced in the anaerobic biofilm reactor in which a biogas which generates a more amount of energy than a power required to treat the food wastewater and the sewage flowing at the time of operation of the system is produced.

Here, when the biogas is produced in the anaerobic biofilm reaction tank via the first mixture equalization tank, a methane gas dissolved in the reaction tank is 10% or lower than COD, and the dissolved methane gas is a ratio (%, $COD_{dissolved\ methane}/COD$ mixture solution) obtained when methane gas dissolved in the water is converted into a COD with respect to a total organic material concentration (COD) in the mixture solution and $COD_{dissolved}$ methane is a value obtained by converting the dissolved methane gas of various products treated through the anaerobic biofilm reactor into a COD, and $COD_{mixture}$ solution is a total COD value of a mixture solution in which the food wastewater and the sewage are mixed.

According to the food wastewater treatment system and an operating method thereof of the present disclosure, inlets of a sewage and food wastewater are separately provided so that a predetermined amount of sewage is mixed with the food wastewater to be treated. Therefore, a large amount of food wastewater which cannot be treated during the existing sewage treatment process can be treated and energized.

Further, according to the food wastewater treatment system of the present disclosure, not only the food wastewater and sewage are simultaneously treated, but also the food wastewater treatment capacity with respect to the sewage may exceed 0.5% (50 times or higher as compared with 0.01% of the related art).

Furthermore, the food wastewater treatment system of the present disclosure generates biogas during the process of simultaneously treating food wastewater and sewage to improve an energy efficiency.

**Brief description of the drawings**

The above and other aspects, features and other advantages of the present disclosure will be more clearly understood from the following detailed description taken in conjunction with the accompanying drawings, in which:

FIG. 1 is a diagram of an overall configuration of a food wastewater treatment system according to the present disclosure; and

FIG. 2 is a graph illustrating an amount of generated methane gas according to a mixture ratio (%) of food wastewater with respect to a sewage according to the present disclosure.

**Detailed description of the preferred embodiment**

Hereinafter, a technical configuration of a food wastewater treatment system according to the present disclosure and an operating method thereof will be described with reference to the accompanying drawings.

In the present application, it will be appreciated that terms "including", "having" or "comprise" are intended to designate the existence of characteristics, numbers, steps, constituent elements, and components described in the specification or a combination thereof, and do not exclude a possibility of the existence or addition of one or more other specific characteristics, numbers, steps, operations, constituent elements, and components, or a combination thereof in advance.

If it is not contrarily defined, all terms used herein including technological or scientific terms have the same meaning as those generally understood by a person with ordinary skill in the art. Terms which are defined in a generally used dictionary should be interpreted to have the same meaning as the meaning in the context of the related art but are not interpreted as an ideally or excessively formal meaning if it is not clearly defined in the present invention.

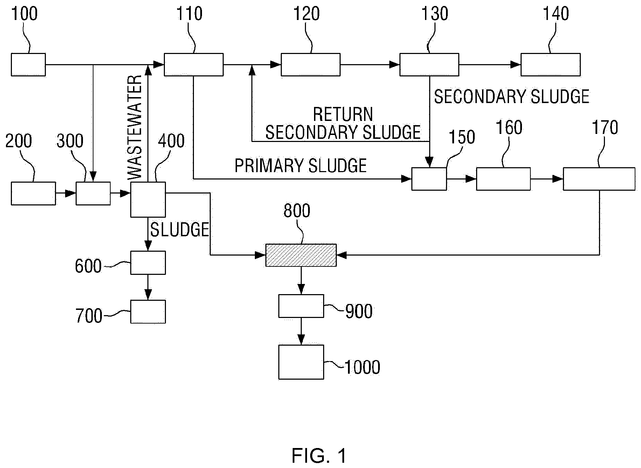

FIG. 1 is a diagram of an overall configuration of a food wastewater treatment system according to the present disclosure. Referring to FIG. 1, the food wastewater treatment system of the present disclosure includes a sewage inlet 1 100, a food wastewater inlet 2 200, a first mixture equalization tank 300 of sewage and food wastewater, an anaerobic biofilm reactor 400, a dehydration tank 600, a disposal tank 700, a biogas collecting unit 800, a purification tank 900, a biogas usage destination 1000, a primary precipitation tank 110, an aerobic tank 120, a secondary precipitation tank 130, a treatment water 140, a second mixture equalization tank 150, a sludge thickener 160, and an anaerobic digestion tank 170.

The food wastewater treatment system of the present disclosure includes a first inlet 100 into which a sewage flows and a second inlet 200 into which a food wastewater flows. A predetermined amount of sewage flowing through the first inlet 100 is mixed with the food wastewater flowing through the second inlet 200 and in the above mixture volume, the food wastewater with respect to the sewage is 0.5% or higher. At a rear end of the first inlet 100, the precipitation tank and the aerobic tank 120 are located and at a rear end of the second inlet 200, the anaerobic biofilm reactor 400 and the biogas purifying unit are located. The wastewater treated in the anaerobic biofilm reactor 400 is transferred to a front end of the precipitation tank.

A sewage is a portion where domestic sewage and sanitary drain collected from local areas and wastewater of factories are collected and the first inlet 100 is located therein.

The second inlet 200 is located for the food wastewater and the food wastewater refers to wastewater which is eliminated and leached from wastes discharged from home or restaurants during a pre-treatment process of food wastes.

Some of the sewage is sent to the first mixture equalization tank 300 to be mixed with the food wastewater but most of the sewage flows into the primary precipitation tank 110. The sewage flowing into the primary precipitation tank 110 precipitates contaminated materials having a large mass by the gravity using a specific gravity difference. In this case, the sewage is separated into a sludge which is a sunk solid and supernatant which is a liquid part of an upper portion after the sludge sinks and this function is performed by the primary precipitation tank 110. Here, the precipitated sludge is referred to as a primary sludge and the primary sludge is sent to the second mixture equalization tank 150 together with a secondary sludge to be precipitated in the secondary precipitation tank 130 located at a rear end of the aerobic tank 120 and is transferred to the anaerobic digestion tank 170 via the sludge thickener 160.

The aerobic tank 120 is located at the rear end of the primary precipitation tank 110 and at the front end of the secondary precipitation tank 130 and aerates the liquid supernatant corresponding to the upper portion after the sludge transferred from the primary precipitation tank 110 is sunk to remove the remaining organic material which is not sunk in the primary precipitation tank 110 using aerobe. The secondary precipitation tank 130 is located at the rear end of the aerobic tank 120 and separates the organic material into the supernatant and the sludge using a specific gravity difference again after decomposing a part of organic material by aerobe in the aerobic tank 120. During this process, the organic material is removed from the wastewater. The secondary precipitation tank 130 is normally a circular structure and a skimmer which collects the precipitated sludge rotates at a lower portion and a weir is provided at an upper portion to overflow the supernatant. Here, a part of sludge to be precipitated is returned to the aerobic tank 120 and the remaining thereof is stored in the second mixture equalization tank 150 together with the primary sludge to be subjected to the mixing process and then is transmitted to the anaerobic digestion tank 170 by reducing a volume of sludge through a concentration process which lowers moisture and increases a concentration of the sludge in the sludge thickener 160. A portion corresponding to the supernatant overflowing in the secondary precipitation tank 130 is completely treated and separated to be transferred and stored to the treatment water 140.

The food wastewater which is eliminated and leached from wastes discharged from home or restaurants during a pre-treatment process of food wastes flows through the second inlet 200 and is mixed with a predetermined amount of sewage flowing through the first inlet 100 in the first mixture equalization tank 300. Two mixed solutions are transferred to the anaerobic biofilm reactor 400 located at the rear end of the first mixture equalization tank 300.

The first mixture equalization tank 300 is a water tank in which the food wastewater flowing through the second inlet 200 for the food wastewater and a predetermined amount of sewage flowing through the first inlet 100 for the sewage are mixed and is located at the rear end of the sewage and the food wastewater. When the food wastewater flows into the first mixture equalization tank 300 at a ratio of 0.5% or higher with respect with the sewage, methane gas which passes through the first mixture equalization tank 300 to be dissolved in the anaerobic biofilm reaction tank may be maintained to be 10% or lower than COD. Here, the dissolved methane gas ratio (%, $COD_{dissolved\ methane}/COD_{mixture\ solution}$) refers to a ratio obtained by converting the methane gas dissolved in various produced materials treated through the anaerobic biofilm reactor 400 into a COD ($COD_{dissolved\ methane}$) and then dividing the COD by a total COD ($COD_{mixture\ solution}$) of the mixture solution in which the food wastewater and sewage are mixed.

A COD is a chemical oxygen demand and is a representative contamination index indicating a degree of contamination of wastewater and sewage together with biochemical oxygen demand (BOD) and is expressed by an amount of oxygen corresponding to an amount of an oxidizing agent consumed to oxidize an organic material when a solution such as potassium permanganate (KMnO4) or potassium dichromate (K2Cr2O7) is injected as an oxidizing agent and is represented in the unit of mg/L or ppm.

The anaerobic biofilm reactor 400 hydrolyzes organic materials existing in the wastewater using a carrier with anaerobe or a separation membrane, similarly to a chemical reaction occurring in the body of microorganism, and produces volatile fatty acid such as acetic acid, propionic acid, and butyric acid and performs gasification treatment by methane, carbon dioxide, ammonia, and hydrogen sulfide. During this process, a concentration of microorganism in the reaction tank may be maintained to be high using a physical property of the carrier or the separation membrane without using the sewage thicker tank 160 or the precipitation tank of the related art. As a result, the anaerobic biofilm reactor 400 advantageously reduces the amount of generated sludge and is stably operated due to high impact load for the inflow of raw water with a low temperature and high concentration in the winter season.

In the food wastewater treatment system according to the present disclosure, a treatment capacity of the food wastewater with respect to the sewage is very important. According to the related art, it is difficult to treat 0.01% or more but according to the present disclosure, it is possible to treat 0.5% or more which is 50 times higher than the related art. As a result, an amount of produced methane gas and the content of dissolved methane gas in the anaerobic biofilm reaction tank of the entire system configuration are drastically increased and reduced. Further, the food wastewater treatment system according to the present disclosure treats the food wastewater including organic materials having a concentration of 500 times higher than that of the sewage to produce a large amount of methane gas so that a larger amount of power required to operate the food wastewater treatment system according to the present disclosure may be generated.

**Examples**

After flowing 200 L/d of sewage therein, when 20 L/d which was 10% thereof flowed into the first mixture equalization tank, the food wastewater flowing through a food wastewater inlet was mixed with 0% to 3% of food wastewater with respect to the amount of sewage flowing into the first mixture equalization tank 300 (V food wastewater/V sewage amount) in the first mixture equalization tank 300. The mixture solution flowed into the anaerobic biofilm reactor 400 to be treated for 12 hours of a retention time at a temperature of 35°C and the treatment water 140 discharged from the anaerobic biofilm reactor 400 was transferred to the aerobic reaction tank to be treated and then discharged via the secondary precipitation tank 130. The sludge of the anaerobic biofilm reactor 400 was subjected to the dehydration (600) process and then discarded (700). The biogas produced in the reactor was purified (900) and then used.

Individual reaction tanks operated under the following operating conditions.

Primary precipitation tank 110: 2.5 hours of hydraulic retention time (HRT)
Secondary precipitation tank 130: 2.5 hours of HRT
Aerobic reaction tank: 15 degrees of operating temperature, 8 hours of HRT, 10 days of solid retention time (SRT)
Anaerobic digestion tank 170: 35 degrees of operating temperature, 30 days of HRT/SRT
Anaerobic biofilm reactor 400: 35 degrees of operating temperature, 12 hours of HRT
Sludge thickener tank 160: 5 days of HRT

In order to measure a concentration of dissolved methane gas, 80 mL of the treatment water 140 discharged from the anaerobic biofilm reactor 400 was immediately put into a 160 mL of serum bottle which was purged by nitrogen gas in advance to be sealed. Next, thereafter, the treatment water and the gas were thoroughly mixed for five minutes and kept in a 35°C oven for 24 hours to reach a liquid-gas phase equilibrium state. Thereafter, a concentration of methane gas in a head space of the serum bottle was measured using GC-TCD. As the concentration of methane gas, a COD concentration of the methane gas dissolved in the treatment water 140 was calculated based on the following equations.

$$COD_{\text{dissolved methane}} = ((V_r - V_s) \times C_{g,eq} + V_s \times C_{w,eq}) \times 64 / V_s$$

$$C_{w,eq} = H \times R \times T \times C_{g,eq}$$

$COD_{\text{dissolved methane}}$ = Dissolved methane concentration in the sample (gCOD/L)
$V_s$ = Volume of liquid sample (L)
$V_r$ = Volume of bottle (L)
$C_{g,eq}$ = Methane concentration in gas under equilibrium (mol/L)
$C_{w,eq}$ = Methane concentration in water under equilibrium (mol/L)
64 = Conversion factor between mole of $CH_4$ and g $CH_4$-COD
H = Henry's Law constant (mol/L·atm)
R = ideal gas constant (0.0821 L·atm/mol·K)
T = Temperature (K)

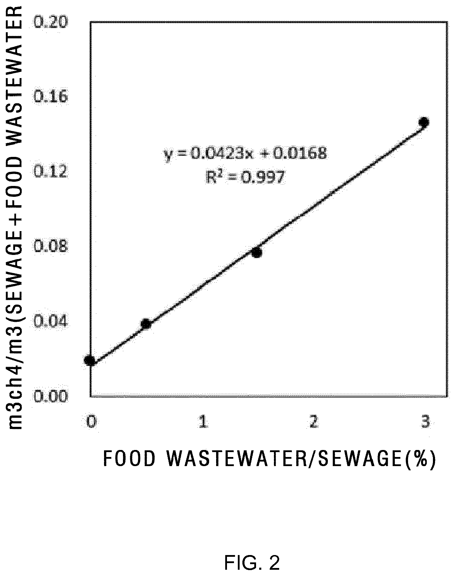

It is confirmed that when the mixture ratio of the food wastewater with respect to the sewage flowing into the first mixture equalization tank 300 was 0%, a ratio (%, $COD_{\text{dissolved methane}}/COD_{\text{mixture solution}}$) of the COD of the methane gas dissolved in the water with respect to the total organic material concentration (COD) in the mixture solution of sewage and food wastewater was 45%, but when the mixture ratio was 0.5%, 1.5%, and 3%, the ratio was lowered to 8%, 3%, and 2%, respectively.
Further, in order to continuously measure an amount of methane gas produced through the food wastewater treatment system according to the present disclosure together with the COD concentration of the methane gas, a product of wet-type gas meter produced by Ritter Apparatebau GmbH & Co. KG was used and an amount of methane was measured based on the change of the content of food wastewater in the sewage. FIG. 2 is a graph illustrating an amount of generated methane gas according to a mixture ratio (%) of food wastewater with respect to a sewage according to the present disclosure and in the graph, the mixture ratio of the food wastewater with respect to the sewage and the amount of produced methane have the relationship as represented in the following Equation 1.

$$(\text{Equation 1}) \ Y = 0.0423 \ X + 0.0168$$

(Here, Y is an amount of produced methane (m3 methane/m3 food wastewater and sewage) and X is a mixture ratio of food wastewater with respect to sewage (% V food wastewater/V sewage))
Further, when the food wastewater treatment system according to the present disclosure is added not only to measure the amount of produced methane gas, but also to measure a change of water quality of the final effluence, a COD concentration of the treatment water 140 discharged from the secondary percipient tank 130 was measured. When the mixture ratio of food wastewater with respect to the sewage flowing into the first mixture equalization tank 300 is 0%, a total organic material concentration (COD) of the final treatment water 140 is 37 mg/L and when the mixture ratios are 0.5%, 1.5%, and 3%, the COD concentrations of the final treatment water 140 are 37, 31, and 49 mg/L, respectively, which are very low so that there is no significant change. Therefore, it is confirmed that even when the ratio of the food wastewater with respect to the sewage flowing into the first mixture equalization tank 300 is increased up to 3%, the sewage and the food wastewater are normally purified.

Although the exemplary embodiment of the present disclosure has been mainly described above, various modifications and changes may be made by those skilled in the art. As long as the modifications and changes do not depart from the scope of the technical spirit of the present disclosure, it is understood that the modifications and changes fall within the scope of the present disclosure. Therefore, the scope of the present disclosure should be construed based on the following claims.

**Claims**

1. A food wastewater treatment system, comprising:

   a first inlet 100 into which a sewage flows, a second inlet 200 into which food wastewater flows;
   a mixture equalization tank in which a predetermined amount of sewage flowing from the first inlet 100 is mixed with the food wastewater flowing from the second inlet 200 and the food wastewater with respect to sewage is 0.5% or higher;
   a precipitation tank and an aerobic tank located at a rear end of the first inlet 100; and
   an anaerobic separation membrane biological reactor and a biogas purifying unit located at a rear end of the second inlet 200,
   wherein a biogas which generates a more amount of energy than a power required to treat the food wastewater and the sewage flowing at the time of operation of the system is produced.

2. The food wastewater treatment system according to claim 1, wherein when the biogas is produced in the anaerobic biofilm reaction tank via the first mixture equalization tank 300, a methane gas dissolved in the reaction tank is 10% or lower than COD.
   (Here, the dissolved methane gas is a ratio (%, $COD_{dissolved\ methane}/COD_{mixture\ solution}$) obtained when methane gas dissolved in the water is converted into a COD with respect to a total organic material concentration (COD) in the mixture solution and $COD_{dissolved}$ methane is a value obtained by converting the dissolved methane gas of various products treated through the anaerobic biofilm reactor 400 into COD, and $COD_{mixture\ solution}$ is a total COD value of mixture solution in which the food wastewater and the sewage are mixed).

3. The food wastewater treatment system according to claim 1, wherein the mixture ratio of the food wastewater with respect to the sewage and the amount of produced methane have the relationship as represented in the following Equation 1.

$$(\text{Equation 1})\ Y = 0.0423\ X + 0.0168$$

In Equation 1, Y is an amount of produced methane (m3 methane/total volume of m3 food wastewater and sewage) and X is a mixture ratio of a food wastewater with respect to a sewage (% V food wastewater/V sewage).

4. An operating method of a food wastewater treatment system, the operating method comprising:

   a first step of flowing a sewage into a first inlet 100 and flowing a food wastewater into a second inlet 200;
   a second step of mixing the sewage flowing into the first inlet 100 and the food wastewater flowing into the second inlet 200 in a first mixture equalization tank in which the food wastewater with respect to the sewage in a mixture volume is 0.5% or more;
   a third step of flowing the sewage and food wastewater mixed in the first mixture equalization tank into an anaerobic biofilm reactor 400 to produce methane gas; and
   a fourth step of transferring a treatment water 140 of the anaerobic biofilm reactor 400 into a front end of the precipitation tank to be treated in an aerobic reaction tank and then discharged through a secondary precipitation tank 130 and performing a dehydration (600) process on a sludge of the anaerobic biofilm reactor 400 and then discarding the sludge, and collecting gas after purifying the gas including methane produced in the anaerobic biofilm reactor 400.

5. The operating method according to claim 4, wherein when the biogas is produced in the anaerobic biofilm reaction tank via the first mixture equalization tank 300, a methane gas dissolved in the reaction tank is 10% or lower than COD.
   (Here, the dissolved methane gas is a ratio (%, $COD_{dissolved\ methane}/COD_{mixture\ solution}$) obtained when methane gas dissolved in the water is converted into a COD with respect to a total organic material concentration (COD) in the mixture solution and $COD_{dissolved}$ methane is a value obtained by converting the dissolved methane gas of various products treated through the anaerobic biofilm reactor 400 into a COD, and $COD_{mixture\ solution}$ is a total COD value of a mixture solution in which the food wastewater and the sewage are mixed).

FIG. 1

FIG. 2

Europäisches
Patentamt

European
Patent Office

Office européen
des brevets

# EUROPEAN SEARCH REPORT

Application Number

EP 18 16 0763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/027373 A1 (JOSSE JUAN CARLOS [US] ET AL) 30 January 2014 (2014-01-30) * paragraphs [0019], [0022]; figure 1 * | 1-5 | INV. C02F9/00 |
| A | JEONG YEONGMI ET AL: "Treatment of food waste recycling wastewater using anaerobic ceramic membrane bioreactor for biogas production in mainstream treatment process of domestic wastewater", WATER RESEARCH, ELSEVIER, AMSTERDAM, NL, vol. 123, 19 June 2017 (2017-06-19), pages 86-95, XP085179544, ISSN: 0043-1354, DOI: 10.1016/J.WATRES.2017.06.049 * 2.1; page 87 * | 1-5 | ADD. C02F103/32 C02F3/02 C02F3/28 |
| A | WO 2013/169091 A1 (RONSER BIO TECH SDN BHD [MY]; MALAYSIAN PALM OIL BOARD [MY]; ZHANG ZHE) 14 November 2013 (2013-11-14) * figure 8 * | 1-5 | |
| A | US 6 982 035 B1 (O'KEEFE DAVID M [US]) 3 January 2006 (2006-01-03) * claim 5; figure 3 * | 1-5 | TECHNICAL FIELDS SEARCHED (IPC) C02F |

The present search report has been drawn up for all claims

| Place of search | Date of completion of the search | Examiner |
|---|---|---|
| The Hague | 29 June 2018 | Du, Mingliu |

EPO FORM 1503 03.82 (P04C01)

**ANNEX TO THE EUROPEAN SEARCH REPORT
ON EUROPEAN PATENT APPLICATION NO.**

EP 18 16 0763

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2018

| Patent document cited in search report | | Publication date | Patent family member(s) | | Publication date |
|---|---|---|---|---|---|
| US 2014027373 | A1 | 30-01-2014 | CA | 2880096 A1 | 30-01-2014 |
| | | | EP | 2877431 A1 | 03-06-2015 |
| | | | US | 2014027373 A1 | 30-01-2014 |
| | | | US | 2015210576 A1 | 30-07-2015 |
| | | | WO | 2014015427 A1 | 30-01-2014 |
| WO 2013169091 | A1 | 14-11-2013 | NONE | | |
| US 6982035 | B1 | 03-01-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020170145910
- KR 101611436
- KR 101189615
- KR 101599424
- KR 101213533